# EUROPEAN PATENT APPLICATION

(11) **EP 4 674 556 A1**
(43) Date of publication of application: **07.01.2026**
(21) Application number: 24185925.5
(22) Date of filing: 02.07.2024
(51) Int. Cl.: B23K 20/04, H01M 4/04, H01M 10/04, H01M 10/0585

(54) **APPARATUS AND METHOD FOR LAMINATING AN ELECTRODE ASSEMBLY AND BATTERY PART COMPRISING AN ELECTRODE ASSEMBLY**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

Disclosed is an apparatus for laminating an electrode assembly. The apparatus (100) is configured to receive an electrode assembly comprising a separator sheet and an electrode sheet. The apparatus comprises a lamination roller assembly with one or more rotatable lamination rollers for laminating the electrode sheet and the separator sheet to each other by application of pressure and/or heat. The apparatus is configured to roll the one or more lamination rollers across the electrode assembly along a lamination direction by moving one or both of the electrode assembly and the one or more lamination rollers. The lamination roller assembly is configured to laminate the electrode sheet and the separator sheet to each other in a plurality of spatially separated lamination areas that are displaced with respect to each other along the lamination direction and a lateral direction perpendicular to the lamination direction.

## Description

### TECHNICAL FIELD

The present invention is in the field of battery technology. In particular, the present invention relates to an apparatus and a method for laminating an electrode assembly as well as to a battery part comprising an electrode assembly.

### TECHNICAL BACKGROUND

A battery such as a secondary battery (rechargeable battery) may comprise an electrode assembly with a pair of electrodes (anode and cathode) that are separated by an insulating separator. The electrodes and the separator may be stacked on top of each other and laminated, for example to secure the electrodes and the separator to each other and prevent them for moving relative to each other during use of the battery. The separator may subsequently be impregnated by an electrolyte so as to allow for electric charge transport between the electrodes, e.g., for charging or discharging the battery. The lamination of the electrodes and the separator may, however, hinder impregnation of the separator by the electrolyte, resulting in incomplete and/or inhomogeneous impregnation, which may affect battery performance.

### SUMMARY OF INVENTION

Against this background, it is desired to provide an electrode assembly, e.g., for use in a battery, in which the electrodes and the separator are properly secured to each other while offering improved battery performance.

This object may be achieved by an apparatus for laminating an electrode assembly, a method for laminating an electrode assembly, and a battery part as defined in the independent claims. Examples thereof are detailed in the dependent claims.

The apparatus according to the present invention may be configured to execute the method of the present invention according to any one of the examples described herein. Additionally or alternatively, the method according to the present invention may be executed using the apparatus of the present invention according to any one of the examples described herein. Further additionally or alternatively, the battery part according to the present invention may be manufactured using the apparatus of the present invention according to any one of the examples described herein and/or using the method of the present invention according to any one of the examples described herein. However, unless indicated otherwise, the features of the apparatus, the method and the battery part according to the present invention do not limit one another. Accordingly, the apparatus may additionally or alternatively also be used for executing other methods and/or manufacturing other battery parts, the method may additionally or alternatively also be executed using a different apparatus (or different apparatuses) and/or for manufacturing other battery parts and the battery part may additionally or alternatively also be manufactured using a different apparatus (or different apparatuses) and/or using a different method.

Any feature or combination of features described herein with regard to the apparatus according to the present invention may also be present for the method according to the present invention and/or the battery part according to the present invention. Additionally or alternatively, any feature or combination of features described herein with regard to the method according to the present invention may also be present for the apparatus according to the present invention and/or the battery part according to the present invention. Further additionally or alternatively, any feature or combination of features described herein with regard to the battery part according to the present invention may also be present for the apparatus according to the present invention and/or the method according to the present invention. For the sake of brevity and to avoid unnecessary repetition, certain features or combination of feature may therefore only be described once with regard to either the apparatus, the method and the battery part, but may likewise apply to the other ones of the apparatus, the method and the battery part.

An apparatus for laminating an electrode assembly is provided. The apparatus is configured to receive an electrode assembly comprising a separator sheet and an electrode sheet. The apparatus comprises a lamination roller assembly with one or more rotatable lamination rollers for laminating the electrode sheet and the separator sheet to each other by application of pressure and/or heat. The apparatus is configured to roll the one or more lamination rollers across the electrode assembly along a lamination direction by moving one or both of the electrode assembly and the one or more lamination rollers. The lamination roller assembly is configured to laminate the electrode sheet and the separator sheet to each other in a plurality of spatially separated lamination areas that are displaced with respect to each other along the lamination direction and a lateral direction perpendicular to the lamination direction.

The electrode assembly may be for use (e.g., suitable or configured for use) in a battery, for example in a primary battery (non-rechargeable battery) and/or a secondary battery (rechargeable battery). The electrode assembly may in particular be for use in a battery part of the present invention according to any one of the examples described herein.

The electrode assembly comprises a separator sheet (which may, e.g., also be referred to as a separator layer) and an electrode sheet (which may, e.g., also be referred to as an electrode layer), both of which may be embodied as commonly known in the art. The electrode sheet may for example comprise an electrically conductive substrate, on which an active material may be deposited. The electrode sheet may be for use as an electrode in the battery, e.g., as an anode and/or cathode. The separator sheet may be configured to spatially separate and/or electrically insulate the electrode sheet from another electrode (e.g., another electrode sheet). The separator may be configured to be impregnated with (e.g., soaked with and/or immersed in) an electrolyte, e.g., so as to allow for the transport of ions therethrough. The separator sheet may for example be made of (e.g., comprise or consist of) a porous insulating material, in particular a microporous insulating material. A binder layer for lamination may be arranged between the separator sheet and the electrode sheet (e.g., at the interface between the separator sheet and the electrode sheet). For example, one or both of the separator sheet and the electrode sheet may be coated with a binder layer for lamination.

The electrode sheet may be arranged on (e.g., in contact with) the separator sheet. As used herein, the term "arranged on" does not imply a certain orientation of the respective elements (e.g., with respect to the direction of gravity) but may, e.g., refer to a first element such as the electrode sheet that is arranged on top of or below a second element such as the separator sheet. Prior to lamination, the separator and electrode sheets may not be attached to each other, e.g., may be moveable with respect to each other.

The separator sheet and/or the electrode sheet may be (or may be part of) a continuous sheet, e.g., a long sheet from which a plurality of separators and/or electrodes are to be formed (e.g., cut). Additionally or alternatively, one or both of the separator sheet and the electrode sheet may be preformed, e.g., in the shape of the separator and electrode, respectively, as used in the final battery (for example as a rectangular or elliptical sheet).

In addition to the separator sheet (which may also be referred to as the first separator sheet) and the electrode sheet (which may also be referred to as the first electrode sheet), the electrode assembly may comprise one or more additional sheets (layers), in particular a second electrode sheet and, optionally, a second separator sheet. The (first) separator sheet may be arranged between the first and second electrode sheet, with the optional second separator sheet, e.g., being arranged on the first or second electrode sheet. The first and second electrode sheets and the first separator sheet (and, optionally the second separator sheet) may together form a monocell, which may refer to the fundamental unit (e.g., electrochemical cell) from which the electrode assembly and/or battery is made up (e.g., by stacking and/or electrically coupling a plurality of monocells). The monocell may comprise two electrodes of opposite polarity (anode and cathode) and may thus be configured to act as a source of electric power. In some examples, the electrode assembly may comprise a plurality of (e.g., alternatingly stacked) separator sheets and electrode sheets, for example between 2 and 50 separator sheets and between 2 and 50 electrode sheets. The plurality of separator sheets and electrode sheets may form a plurality of monocells, e.g., a stack of monocells.

The apparatus comprises a lamination roller assembly for laminating (e.g., configured to laminate) the electrode sheet and the separator sheet to each other. As used herein, the term "laminate" may refer to any type of attachment by which the separator sheet and the electrode sheet (e.g., surfaces thereof) may be joined (e.g., adhered, bonded and/or bound) to each other such that the separator sheet and the electrode sheet form a joint ("laminated") structure of two (or more) layers/sheets. The lamination may be effected by application of pressure and/or heat (e.g., by the one or more lamination rollers) to the electrode assembly (e.g., selectively to the spatially separated lamination areas). The pressure (e.g., in the lamination areas) may for example be between 1 N/mm² and 100 N/mm², in some examples between 5 N/mm² and 50 N/mm², in one example between 10 N/mm² and 30 N/mm². The electrode assembly (e.g., in the lamination areas) may for example be heated (e.g., by the one or more lamination rollers) to a temperature between 30°C and 150°C, in some examples between 40°C and 120°C, in one example between 45°C and 100°C and in one example between 60°C and 90°C. The attachment through lamination may involve physical and/or chemical surface-surface interactions at the interface between the electrode sheet and the separator sheet. For example, a binder layer arranged between separator sheet and the electrode sheet (e.g., coated on a surface of one or both of the separator sheet and the electrode sheet) may melt when the pressure and/or heat is applied. Thereby, the separator sheet and the electrode sheet may be laminated to each other (e.g., adhere to each other). In some examples, the attachment through lamination may not involve any additional (other than the separator sheet and the electrode sheet themselves and, optionally, the binder layer(s) thereon) chemical attachment means such as adhesives (i.e., the separator sheet and the electrode sheet may be laminated to each other without any adhesive arranged therebetween). The attachment through lamination may not involve any mechanical attachment means such as fasteners or clamps. The lamination may be "permanent", e.g., configured to hold throughout the lifetime of the battery.

The lamination roller assembly comprises one or more rotatable lamination rollers, each of which may be configured to apply pressure and/or heat to the electrode assembly (e.g., selectively to the spatially separated lamination areas or a respective subset thereof). Each of the lamination rollers may be configured to rotate about a respective rotation axis, wherein the rotation axes of one or more, in some examples all of the lamination rollers may coincide in some examples. As used herein, the term "rotation axis" refers to a mathematical axis, which does not necessarily imply the presence of a corresponding mechanical axis (e.g., a shaft or rod). Each of the lamination rollers may comprise or consist of a thermally conductive material (e.g., having a thermal conductivity of more than 10 W/(m · K), in some examples more than 20 W/(m · K), in one example more than 30 W/(m · K) and in one example more than 40 W/(m · K)). Each of the lamination rollers may comprise or consist of a metal such as steel.

The apparatus is configured to roll the one or more lamination rollers across the electrode assembly along a lamination direction, e.g., rotate the one or more lamination rollers while the lamination rollers and the electrode assembly are in contact with and move relative to each other along the lamination direction. This may involve moving (e.g., translating) one or both of the electrode assembly and the one or more lamination rollers along the lamination direction (in the stationary reference frame of the apparatus). For example, the electrode assembly (i.e., the separator sheet and the electrode sheet) may be moved (e.g., advanced) through the apparatus (for example from one or more supply rolls providing the non-laminated sheets to a pickup roll for receiving the laminated sheets) while some or all of the lamination rollers may be fixed in position (while still being rotatable about their respective rotation axis). The lamination direction may also be referred to as the x-direction or advance direction (of the electrode assembly/the separator and electrode sheets) herein. The lamination direction may be parallel to (in plane with) the separator sheet and/or electrode sheets (e.g., parallel to an interface between the separator sheet and the electrode sheet).

The lamination roller assembly (e.g., the one or more lamination rollers) is configured to selectively laminate the electrode sheet and the separator sheet to each other in a plurality of spatially separated lamination areas while not laminating (or laminating to a lesser, preferably much lesser degree) the electrode sheet and the separator sheet to each other in intermediate areas arranged between (e.g., separating) the lamination areas. For example, the lamination roller assembly (e.g., the one or more lamination rollers) may be configured to selectively apply pressure and/or heat to the lamination areas (e.g., without applying pressure and/or heat (or applying less, preferably much less, pressure and/or heat) to the intermediate areas, for example so as to not effect lamination in the intermediate areas).

The spatially separated lamination areas (e.g., the centers thereof) are displaced with respect to (e.g., spaced apart from) each other along the lamination direction as well as along a lateral direction (which may also be referred to as the y-direction or transverse direction herein) that is perpendicular to the lamination direction (and parallel to the separator sheet and/or the electrode sheet, e.g., to an interface therebetween). For example, each of the lamination areas may be displaced with respect to one or more of the other lamination areas at least along the lamination direction (and, optionally along the lateral direction) and displaced with respect to one or more of the other lamination areas at least along the lateral direction (and, optionally along the lamination direction). The lamination areas may be arranged in a two-dimensional pattern, e.g., a two-dimensional array (in a plane spanned by the lamination direction and the lateral direction), for example as detailed below for the battery part according to the invention. Subsets of the lamination areas (e.g., "rows" or "columns") may (but need not) be arranged (e.g., aligned) along the lamination direction, the lateral direction and/or any direction in the plane spanned by the lamination direction and the lateral direction. The lamination areas may be distributed across the electrode assembly, e.g., across the entire length of the electrode assembly (in the lamination direction) and/or across the entire width of the electrode assembly (in the lateral direction).

As used herein, the term "lamination area" may refer to an area or a region in which two or more sheets are laminated to each other. Where more than two sheets are laminated together, aligned or overlapping interfaces (as seen perpendicular to the sheets) at which respective adjacent layers are laminated to each other may be considered a same lamination area for the purpose of this disclosure, i.e., a lamination area may, e.g., comprise the laminated interfaces of all sheets or layers of the electrode assembly at the respective position or in the respective region.

The number, shape and size of the lamination areas is not particularly limited. There may, for example, be between 3 and 100, in some examples between 4 and 20, in one example between 6 and 10 lamination areas. In some examples, the lamination areas may have a rounded shape (e.g., not have any sharp corners or edges), for example as detailed below for the battery part according to the present invention. Each of the lamination areas may be small as compared to an overlap area in which the electrode sheet and the separator sheet overlap (e.g., when seen along a normal direction (z-direction) perpendicular to the lamination and lateral directions), for example as described below for the battery part according to the present invention.

By selectively laminating the electrode sheet and the separator sheet to each other in a plurality of spatially separated lamination areas that are displaced with respect to each other along the lamination and lateral directions, sufficient attachment between the electrode and separators sheets may be achieved (e.g., to prevent the sheets from moving or sliding relative to each other) while at the same time promoting electrolyte impregnation. The electrolyte may for example enter the electrode assembly along the (non-laminated) intermediate areas between the lamination areas (e.g., along an interface between the electrode sheet and the separator sheet). As the intermediate areas extend along both the lamination direction and the lateral direction (e.g., forming a network of interconnected channels extending along the two directions), impregnation of the separator sheet by the electrolyte may be facilitated.

The one or more lamination rollers comprise a lamination roller having a plurality of protrusions projecting from an outer surface thereof that faces the electrode assembly when said lamination roller is rolled across the electrode assembly. Each of said protrusions may be configured to laminate the electrode sheet and the separator sheet to each other in a respective one of said plurality of spatially separated lamination areas. The lamination roller may for example have a cylindrical body that is rotatable about a rotation axis of the lamination roller. The protrusion may be arranged on an outer surface of the cylindrical body (e.g., protrude therefrom). The protrusions may be configured to come in contact with the electrode assembly (and, e.g., apply pressure and/or heat thereto) when the lamination roller is rolled across the electrode assembly.

The number, shape and size of the protrusions is not particularly limited and may for example be adapted to (e.g., correspond to or match) the number, shape and size, respectively) of the lamination areas. The lamination roller may, for example, have between 3 and 100, in some examples between 4 and 20, in one example between 6 and 10 protrusions. In some examples, the rounded shape may have a rounded shape, e.g., as detailed below. Each of the protrusions may be small as compared to a surface area of the cylindrical body, e.g., have a width along the rotation axis that is less than 20%, in some examples less than 10%, in one example less than 5% of an axial extent ("length") of the cylinder and/or have a length along a circumferential direction of the cylindrical body that is less than 30%, in some examples less than 20%, in one example less than 5% and in one example less than 5% of a circumference of the cylindrical body. The protrusions may for example protrude from the outer surface of the lamination roller by (e.g., have a height over the outer surface of) between 0.1 mm and 20 mm, in some example between 0.2 mm and 10 mm, in some examples between 0.5 mm and 5 mm and in one example between 1 mm and 3 mm. The height of the protrusions may for example be chosen so as to be between 2% and 20%, in some examples between 5% and 15%, in one example between 8% and 12% of a thickness of the electrode assembly (e.g. measured perpendicular to the lamination and lateral directions), e.g., to effect a reduction in thickness of the electrode assembly during lamination of between 0.2% and 10%, in some examples between 0.5% and 5%, in one example between 1% and 3%. The protrusions may comprise or consist of a thermally conductive material (e.g., having a thermal conductivity of more than 10 W/(m · K), in some examples more than 20 W/(m · K), in one example more than 30 W/(m · K) and in one example more than 40 W/(m · K)). The protrusions may comprise or consist of a non-elastic material. The protrusions may comprise or consists of a metal such as steel. The protrusions may comprise a reinforcing coating, for example a diamond-like carbon (DLC) coating.

The protrusions may be displaced with respect to (e.g., spaced apart from) each other along one or both of a rotation axis of said lamination roller (e.g., corresponding to the cylinder axis/axial direction of the cylindrical body) and a circumferential direction of said lamination roller), the circumferential direction extending azimuthally (i.e., along the circumference) around the rotation axis of the lamination roller (and, e.g., corresponding to the circumferential direction around the cylindrical body). For example, each of the protrusions may be displaced with respect to one or more of the other protrusions at least along the circumferential direction (and, optionally along the rotation axis) and displaced with respect to one or more of the other protrusions at least along the rotation axis (and, optionally along the circumferential direction). The rotation axis may be parallel to the lateral direction and/or the circumferential direction may be parallel to the lamination direction (e.g., at the contact point between the lamination roller and the electrode assembly. The protrusions may be arranged in a two-dimensional pattern (on the outer surface of the lamination roller), e.g., as described herein for the lamination areas. The protrusions may be distributed across the lamination roller, e.g., across the entire axial extent (along the rotation axis) and/or across the entire circumference of the electrode assembly (in the circumferential direction).

The protrusions on the lamination roller may comprise a first set of protrusions and a second set of protrusions, each of which may for example comprise two or more protrusions (e.g., between two and ten protrusions). Each of the first and second sets of protrusions may be configured to laminate the electrode sheet and the separator sheet to each other in a respective subset of the spatially separated lamination areas. The first set of protrusions may displaced with respect to the second set of protrusions along the rotation axis of the lamination roller. Additionally or alternatively, within one or both of the first and second sets of protrusions, the protrusions of the respective set may be displaced with respect to each other along the circumferential direction of the lamination roller. Some or all of the protrusions of the first set may be aligned with a respective protrusion of the second set along the circumferential direction. The first set of protrusions and the second set of protrusions may be arranged in opposite end portions of said lamination roller along the rotation axis of the said lamination roller (which may, e.g., correspond to opposite edge portions of the electrode assembly).

The protrusions on the lamination roller may comprise one or more additional sets of protrusions, for example a third set of protrusions arranged between the first and second sets of protrusions along the rotation axis (for example in a center portion (e.g., at the center) of the lamination roller along the rotation axis). The one or more additional sets of protrusions may be embodied similar to the first and second sets of protrusions and, e.g., comprise the same or a similar number of protrusions arranged along the circumference of the lamination roller.

Some or all of the protrusions may have a rounded shape, e.g., to produce lamination areas with a rounded shape and/or to avoid damaging the electrode assembly and/or the electrode assembly becoming stuck in the apparatus. For example, the respective protrusions may have a rounded cross-section as viewed perpendicular to the outer surface of the lamination roller (i.e., along the radial direction of the lamination roller) and/or a rounded profile as viewed along the rotation axis of the lamination roller (i.e., profile/cross-section in a plane perpendicular to the rotation axis). A used herein, a rounded shape may for example refer to a shape that does not exhibit any sharp edges and/or corners. A shape may for example be considered to be rounded if all corner radii of the shape are larger than 0.5 mm, preferably larger than 1.0 mm, in some examples larger than 2.0 mm and in one example larger than 3.0 mm. The rounded protrusions may for example have an elliptical and in particular circular cross-section and/or profile corresponding to a segment of an ellipse and in particular circle (e.g., a half-ellipse or half-circle). In one example, the rounded protrusions may be shaped as a segment of an ellipsoid (e.g., a hemiellipsoid), in particular as a segment of a sphere (e.g., a hemisphere).

In some examples, one or more of the protrusions may extend around the entire circumference of the lamination roller, e.g., one or both of the outermost protrusions along the rotation axis.

Instead of or in addition to protrusions on the lamination roller, selective lamination in spatially separated lamination areas may also be achieved by other means for locally applying pressure and/or heat to the electrode assembly, for example by providing protrusions on a counterpart of the lamination rollers against which the lamination roller (on which, optionally, suitable depressions such as recesses or cut-outs may be provided) may press the electrode assembly (or vice-versa). Additionally or alternatively, heating elements and/or actuated pressing elements may be provided on and/or in the lamination roller and/or the counterpart.

The one or more lamination rollers may comprise a plurality of lamination rollers that are displaced with respect to each other at least in the lateral direction (and, optionally also along the lamination direction) and/or at least along the lamination direction (and, optionally also along the lateral direction). Each of these lamination rollers may be configured to laminate the electrode sheet and the separator sheet to each other in a respective subset (comprising one or more lamination areas) of said plurality of spatially separated lamination areas.

Each of said plurality of lamination rollers may have a plurality of protrusions projecting from an outer surface thereof that faces the electrode assembly when said lamination roller is rolled across the electrode assembly. The protrusions may be displaced with respect to each other along a circumferential direction of the respective lamination roller (and, optionally, also along the rotation axis of the lamination roller). The protrusions may for example be embodied as described above.

The one or more lamination rollers may for example comprise a first lamination roller comprising a first set of protrusions (e.g., as described above), a second lamination roller comprising a second set of protrusions (e.g., as described above) and, optionally a third (and/or fourth, fifth, etc.) lamination roller comprising a third set of protrusion (e.g., as described above). The first and second lamination rollers may for example be configured to be rolled across opposing edge portions of the electrode assembly (said edge portions, e.g., being displaced along the lateral direction and extending along the lamination direction). The third (fourth, fifth, etc.) lamination rollers may be arranged between the first and second lamination rollers, e.g., at a center therebetween. The third lamination roller may for example be configured to be rolled across a center portion of the electrode assembly (arranged between the opposing edge portions thereof).

Some or all of the displaced lamination rollers may be arranged equidistantly from each other along the lateral direction. Additionally, some or all of the displaced lamination rollers may be rotatable about a same rotation axis (e.g., be arranged on a same mechanical axis), for example be aligned along the lamination direction.

The present invention further provides a method for laminating an electrode assembly (e.g., an electrode assembly for use in a battery). The method comprises providing an electrode assembly comprising a separator sheet and an electrode sheet arranged on the separator sheet. The electrode sheet and the separator sheet are laminated to each other in a plurality of spatially separated lamination areas by local application of pressure and/or heat to the spatially separated lamination areas using one or more rotating lamination rollers. The spatially separated lamination areas are arranged spaced apart from each other along a first direction and a second direction different from the first direction.

The method may for example be executed using an apparatus of the present invention according to any one of the examples described herein (e.g., using the lamination rollers of the lamination roller assembly of said apparatus) and/or may be used to manufacture the battery part (or a part thereof such as the electrode assembly) of the invention according to any one of the examples described herein.

The lamination areas (e.g., the edges or boundaries thereof) are spaced apart from each other (e.g., displaced with respect to each other) along the first and second directions. The first and second directions are not colinear, i.e., are at an angle to each other (e.g., perpendicular). The first direction may for example correspond to the lamination direction (e.g., an advance direction of the electrode assembly) and/or the second direction may for example correspond to the lateral direction. The lamination areas may be separated by non-laminated intermediate areas, e.g., as described below. The lamination areas may be arranged in a two-dimensional pattern. The lamination areas may for example be arranged as described herein for the apparatus and/or the battery part according to the present invention. The lamination process laminating the electrode sheet and the separator sheet to each other in the plurality of spatially separated laminated areas may also comprise the lamination of additional sheets (e.g., a second electrode sheet and, optionally, a second separator sheet) to the electrode sheet and the separator sheet in the plurality of laminated areas, e.g., as detailed below.

The method may further comprise packaging the electrode assembly in a housing (e.g., a case or container). The housing may for example be configured protect the electrode assembly and/or provide electrical connections thereto. The housing may be configured to seal the electrode assembly, e.g., in a fluid- and/or air-tight manner.

The method may comprise injecting an electrolyte into the housing. The electrolyte is not particularly limited and may be any electrolyte suitable for use in a battery, in particular a secondary battery. The electrolyte may be injected such that the electrolyte impregnates the separator sheet. The electrolyte may for example enter the electrode assembly along the intermediate areas between the spatially separated lamination areas, e.g., at the interface between the electrode and separator sheets and diffuse into the separator sheet from there.

The spatially separated lamination areas may be arranged in a two-dimensional array. As used herein, a two-dimensional array may refer to a regular or irregular pattern in which the respective elements (e.g., lamination areas) are arranged in a row-column structure, wherein the rows and columns need, however, not necessarily be perpendicular to each other (but merely at a non-zero angle).

The electrolyte may be injected into the housing along one of the axes of the array (e.g., in the direction of the rows or columns), for example at an angle of less than 20°, preferably less than 10°, in one example less than 5° to the respective axis. This may facilitate injecting the electrolyte into the electrode assembly and thereby impregnation of the separator sheet by the electrolyte. Additionally or alternatively, the electrolyte may be injected into the housing along the first direction (e.g., the lamination direction) or the second direction (e.g., the lateral direction).

In some examples, the method may comprise a second lamination step for laminating the electrode sheet and the separator sheet (and, optionally, other sheets of the electrode assembly) after injecting the electrolyte, for example to also laminate the respective sheets to each other in the intermediate areas between the spatially separated lamination areas, e.g., to improve attachment.

The electrode assembly may comprise a monocell (e.g., a fundamental battery unit) formed by said electrode sheet as a first electrode sheet, a second electrode sheet and the separator sheet, wherein the separator sheet is arranged between the first and second electrode sheets. Optionally, the monocell may comprise a second separator sheet, which may, e.g., be arranged on the first or second electrode sheet (i.e., such that the separator sheets and electrode sheets are alternatingly stacked). The first electrode sheet, the (first) separator sheet, the second electrode sheet and, optionally, the second electrode sheet may be laminated to each other in the plurality of lamination areas.

In some examples, the electrode assembly may comprise further electrode and/or separator sheets, e.g., a plurality of electrode sheets (e.g., three or more electrode sheets) and a plurality of separator sheets (e.g., three or more separator sheets), which may for example be alternatingly stacked. All of these sheets may be laminated to each other (i.e., to the respective adjacent sheet(s)) in the spatially separated lamination areas when laminating the (first) electrode sheet and the (first) separator sheet to each other.

The method may further comprise stacking the monocell with a plurality of other monocells to form a stack of monocells, e.g., arranging the monocell on or in a stack of monocells. This may comprise attaching the monocell to the plurality of other monocells. The monocell may for example be laminated to the plurality of other monocells. Additionally or alternatively, the monocell may for example be attached to the other monocells using an adhesive tape (e.g., on one or more side faces of the stack of monocells), for example to secure the stack of monocells temporarily (e.g., prior to lamination) or permanently. The monocell may be attached to the plurality of other monocells after laminating the first electrode sheet, the separator sheet and the second electrode sheet to each other in said plurality of lamination areas, for example using an adhesive tape and/or by performing a second lamination process (e.g., using a different lamination assembly, for example a different lamination roller assembly). In other examples, the monocell may be attached (e.g., laminated) to the plurality of other monocells in the same lamination process in which the first electrode sheet, the separator sheet and the second electrode sheet are laminated to each other. The monocell may be attached (e.g., laminated) to the plurality of other monocells (and, optionally, some or all of the other monocells to each other, e.g., the entire stack of monocells) in the plurality of spatially separated lamination areas (in which the sheets of the monocells are laminated to each other), in another plurality of spatially separate lamination areas (which may be embodied similar to the lamination areas in which the sheets of the monocells are laminated to each other) and/or in a single (or a smaller number, e.g., two, three or four) contiguous lamination area(s) (e.g., uniformly laminated over the entire interface). The plurality of other monocells may be stacked and/or attached to each other prior to attaching the monocell (e.g., provided as a pre-formed stack) or in the same process (e.g., stacked and/or attached simultaneously with the monocell). Some or all of the other monocells may be embodied in the same way as the monocell attached thereto. The separator and electrode sheets of some or all of the other monocells may be laminated prior to laminating the monocell (e.g., using the same process as described above) and/or may be laminated together with the separator and electrode sheets of the monocell in the same lamination process (e.g., for laminating the sheets of the individual monocells to each other as well as laminating the different monocells to each other). The number of monocells is not particularly limited and the stack of monocells may for example comprise between 2 and 100 monocells, in some examples between 4 and 50 monocells.

The present invention further provides a battery part that comprises an electrode assembly with an electrode sheet and a separator sheet. The electrode sheet and the separator sheet are laminated to each other in a plurality of lamination areas that are distributed across the electrode assembly in a two-dimensional pattern.

The battery part may be an entire battery (e.g., a battery cell, a battery pack or a battery module) or may be a part or portion of a battery, for example only the electrode assembly and/or a monocell stack as an individual unit (i.e., the battery part may, e.g., consist of the electrode assembly or a monocell stack comprising the electrode assembly). The battery may be a primary battery (non-rechargeable battery) or a secondary battery (rechargeable battery). The battery part may be a final product (e.g., after completion of manufacture) or may be an intermediate product during manufacture (e.g., at a certain, non-final stage of manufacture). For example, the battery part may be an intermediate product prior to injection of the electrolyte and/or prior to execution of a second lamination process for laminating intermediate areas between the lamination areas (e.g., after injection of the electrolyte). The battery part may be manufactured using the apparatus of the invention according to any one of the examples described herein and/or the method of the invention according to any one of the examples described herein.

The lamination areas are distributed across the electrode assembly, e.g., across at least 50%, in some examples at least 80%, in one example at least 90% of a width (e.g., in the lateral direction) of an overlap area in which the electrode sheet and the separator sheet overlap and/or across at least 50%, in some examples at least 80%, in one example at least 90% of a length (e.g., in the lamination direction) of the overlap area. The lamination areas may be spatially separated, e.g., not connected or contiguous with each other. The lamination areas (e.g., the boundaries or edges thereof) may be spaced apart from each other, for example along both a first direction (e.g., the lamination direction) and a second direction (e.g., the lateral direction) as described above. The lamination areas (e.g., the centers thereof) may be displaced from each other, for example along both the first direction (e.g., the lamination direction) and the second direction (e.g., the lateral direction) as described above.

The two-dimensional pattern may be a regular (e.g., periodic) pattern or an irregular periodic (e.g., non-periodic) pattern. The two-dimensional pattern may in particular be a (regular or irregular) two-dimensional array (i.e., a row-column pattern), wherein the rows and columns need, however, not necessarily be perpendicular to each other (but merely at a non-zero angle). The array may for example comprise between two and ten columns (e.g., along the first/lamination direction) and/or between two and ten rows (e.g., along the second/lateral direction).

The plurality of lamination areas may comprise one or more corner lamination areas that are arranged in a respective corner of the (e.g., rectangular) overlap area in which the electrode sheet and the separator sheet overlap. In some examples, there may be a respective corner lamination area in each corner to the overlap area.

Additionally or alternatively, the plurality of lamination areas may comprise one or more edge lamination areas extending parallel and adjacent to a respective edge of the (e.g., rectangular) overlap area. In some examples, there may be a respective edge lamination area along each edge to the overlap area.

The shape of the lamination areas is not particularly limited and the lamination areas may in principle take any shape that is suitable for manufacture and/or for attaching the electrode and separator sheets to each other. The lamination areas may have a rounded shape (e.g., without sharp corners or edges). Some or all of the lamination areas may for example have an elliptical shape, in particular a circular shape. Additionally, some or all of the lamination areas may for example have a rounded polygonal shape, e.g., the shape of a rounded rectangle.

Some or all of the lamination areas may have a length (e.g., along the lamination direction) that is similar to a width (e.g., along the lateral direction) of the respective lamination areas. For example, an aspect ratio of the respective lamination areas may be between 0.5 and 1.5, in some examples between 0.8 and 1.2. Additionally or alternatively, the plurality of lamination areas may comprise one or more elongated lamination areas, e.g., lamination areas having a longer extent in one direction (e.g., the lamination direction) than in a direction perpendicular thereto (e.g., the lateral direction), for example an aspect ratio greater than 1.5, in some examples greater than 2.0 and in one example greater than 3.0. The aforementioned edge lamination areas may for example be elongated. The plurality of lamination areas may comprise a plurality of elongated lamination areas that extend parallel to each other along a first direction (e.g., the lamination direction) and are displaced along a second direction (e.g., the lateral direction) perpendicular to the first direction.

The size and number of the lamination areas is also not particularly limited and may for example be adapted as suitable for manufacture and/or attaching the electrode and separator sheets to each other. There may, for example, be between 3 and 100, in some examples between 4 and 20, in one example between 6 and 10 lamination areas. Each of the lamination areas may be small as compared to the overlap area in which the electrode sheet and the separator sheet overlap. For example, each of the lamination areas may cover no more than 20%, in some examples no more than 15%, in some examples no more than 10%, in some examples no more than 5%, in one example no more than 2% and in one example no more than 1% of the overlap area. Additionally or alternatively, the lamination areas may together cover less than 50%, preferably less than 30%, most preferably less than 20%, in one example less than 15%, in one example less than 10% and in one example less than 5% of the overlap area in which the electrode sheet and the separator sheet overlap.

The lamination areas may be separated from each other by one or more intermediate areas (e.g., a single contiguous intermediate area in which the lamination areas are arranged), in which the electrode sheet and the separator sheet are not laminated to each other or are laminated to each other to a lesser degree (e.g., partially or incompletely) than in the lamination areas (e.g., due to a partial or incomplete lamination when laminating the electrode and separator sheets in the lamination areas or due to a lamination during a later lamination process, e.g., after injecting the electrolyte). Some or all of the one or more intermediate areas may extend across an entire length (e.g., along the lamination direction) and/or an entire width (e.g., along the lateral direction) of the overlap area in which the electrode sheet and the separator sheet overlap. The one or more intermediate areas may form one or more channels, in particular an interconnected network of channels, for an electrolyte, wherein the channel or network of channels may span the entire length and/or width of the overlap area

The electrode assembly may be or comprise a monocell comprising said electrode sheet as a first electrode sheet, a second electrode sheet, the (first) separator sheet arranged between the first and second electrode sheets and, optionally, a second separator sheet (e.g., arranged on the first or second electrode sheet). The first electrode sheet, the first separator sheet, the second electrode sheet and, optionally, the second separator sheet, may be laminated to each other in said plurality of lamination areas.

In some examples, the electrode assembly may be, comprise or be comprised in a stack of a plurality of such monocells. Within each monocell, the electrode and separator sheets may be laminated together in a plurality of lamination areas distributed across the respective monocells in a two-dimensional pattern (e.g., as described above), wherein the lamination areas in different monocells may or may not be aligned with each other. The monocells may be attached (e.g., using an adhesive tape and/or laminated) to each other, for example also in a plurality of lamination areas (in particular in the same plurality of lamination areas as the sheets of the individual monocells) and/or laminated uniformly (e.g., in a single contiguous lamination area).

The battery part may be or comprise a secondary battery cell comprising the electrode assembly. The secondary battery cell may for example be or comprise a pouch-type secondary battery cell but may alternatively also be embodied as any other type of secondary battery cell known in the art, e.g., a coin-type, cylindrical or prismatic secondary battery cell.

### BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or corresponding element.

It is noted that the features shown in the drawings may not be true to scale. Particularly, some features may be illustrated in an enlarged or size-reduced manner such as to emphasize the technical concept and the working principle of the present invention rather than providing a layout or a template for constructing the apparatus or battery part according to the present invention.
FIG. 1 shows a schematic illustration of an apparatus for laminating an electrode assembly according to an example in side view.
FIG. 2a and 2b show schematic illustrations of an electrode assembly according to an example in side view and top view, respectively.
FIG. 3a, 3b and 3c show schematic illustrations of electrode assembly according to other examples in top view.
FIG. 4a and 4b show schematic illustrations of a lamination roller assembly according to an example in side view and top view, respectively.
FIG. 5a and 5b show schematic illustrations of a lamination roller assembly according to another example in side view and top view, respectively.
FIG. 6 shows a flow diagram of a method for laminating an electrode assembly according to an example.
FIG. 7a and 7b show schematic illustrations of a battery part according to an example in top view and side view, respectively.

### DETAILED DESCRIPTION

In the drawings, the x-direction may correspond to the aforementioned lamination direction and the y-direction may correspond to the aforementioned lateral direction. The z-direction may correspond to a direction normal to the electrode assembly (e.g., normal to the separator sheet and/or the electrode sheet), which may for example correspond to a stacking direction of the electrode assembly along which the electrode and separator sheets are arranged or stacked on top of each other.

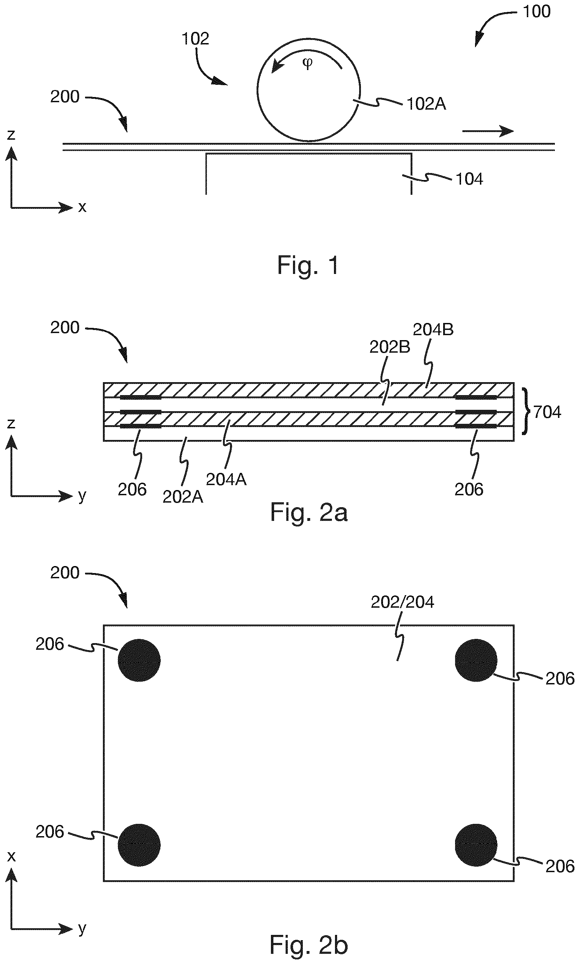

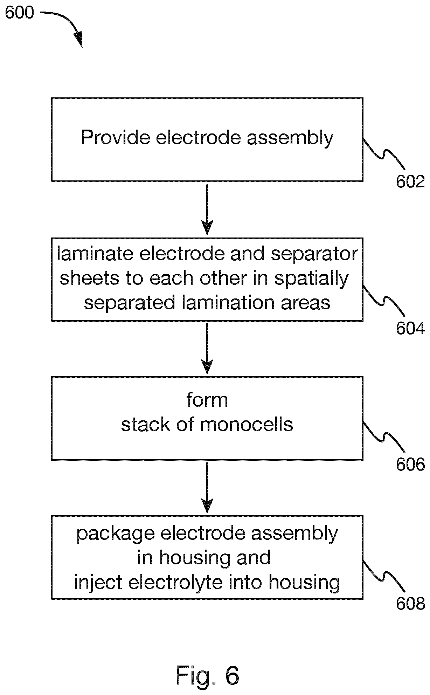

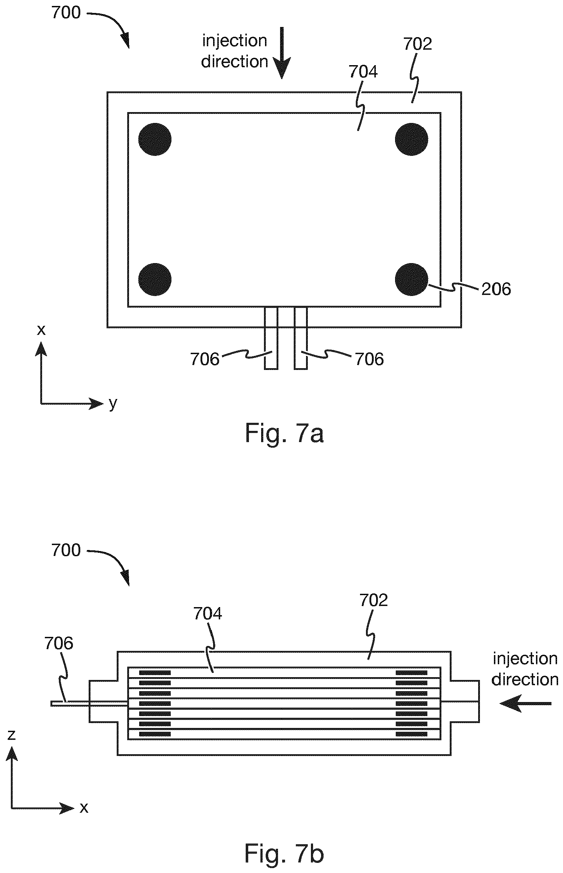

FIG. 1 shows a schematic illustration of an apparatus 100 for laminating an electrode assembly 200 (not shown) according to an example in side view (e.g., along the lateral direction/y-direction). The apparatus 100 may for example be used for executing a method according to the present invention such as the method 600 described below with reference to Fig. 6. The electrode assembly 200 may be for use in a battery. The electrode assembly 200 may for example be used in (e.g., be part of) the battery part according to the present invention such as the battery part 700 describe below with reference to Fig. 7a and 7b.

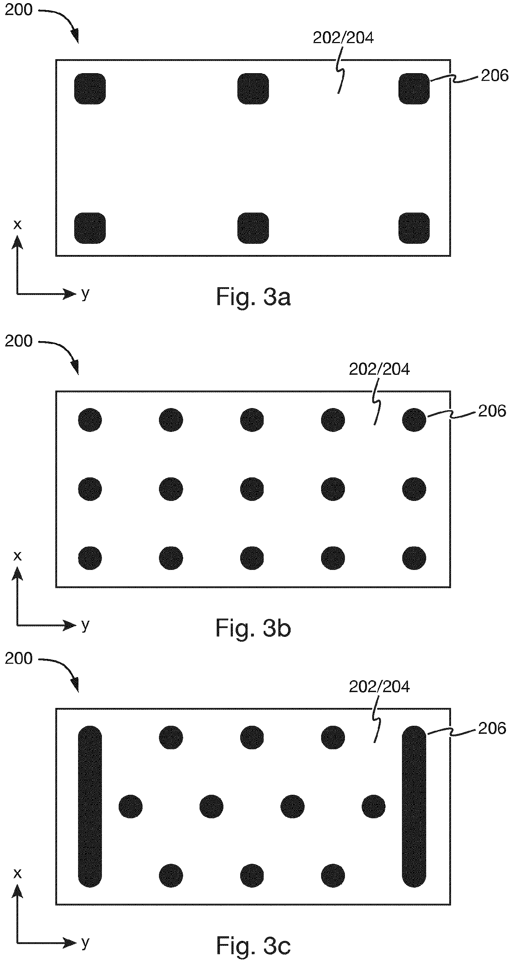

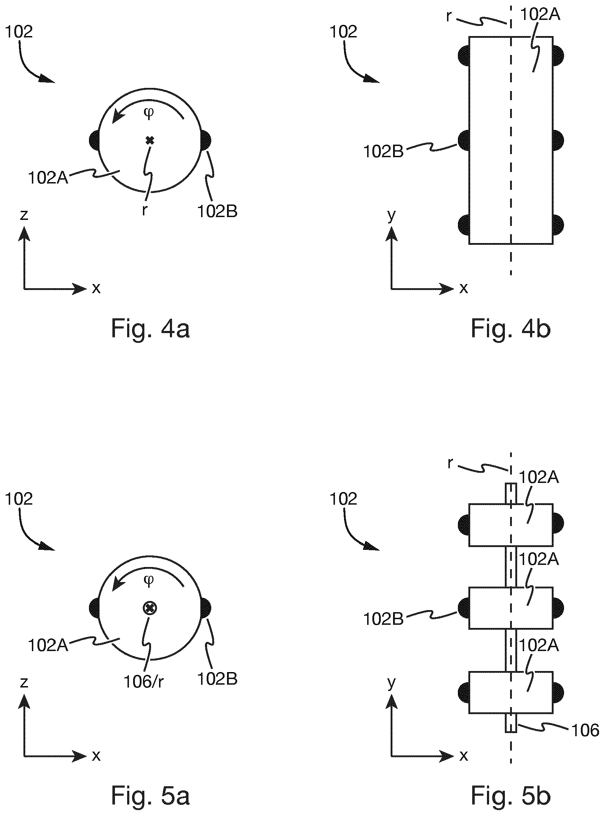

The apparatus 100 is configured to receive an electrode assembly 200 comprising a separator sheet and an electrode sheet, wherein the electrode assembly 200 may for example be embodied as described below with reference to Fig. 2a. The apparatus 100 comprises a lamination roller assembly 102 with one or more rotatable lamination rollers 102A. The lamination roller assembly 102 may for example be embodied as described below with reference to Fig. 4A/B and 5A/B. The lamination roller assembly 102 is configured to selectively laminating the electrode sheet and the separator sheet to each other in a plurality of spatially separated lamination areas, for example as described below with reference to Fig. 2A/B and 3A-C.

For laminating the electrode assembly 200, the apparatus 100 is configured to roll the one or more lamination rollers 102A across the electrode assembly 200 along a lamination direction (corresponding to the x-direction in Fig. 1) by moving one or both of the electrode assembly 200 and the one or more lamination rollers 102A. The apparatus 100 may for example be configured to advance the electrode assembly 200 along the lamination direction as indicated by the horizontal arrow in Fig. 1. The electrode assembly 200 may be fed to the lamination roller assembly 102, where the one or more lamination rollers 102A may be rotated (e.g., passively by the advancing electrode assembly 200 or actively by an actuation mechanism such as an electric motor) as illustrated by the arrow labelled φ in Fig. 1 so as to roll across a surface of the electrode assembly 200. The one or more lamination rollers 102A may be configured to selectively apply pressure and/or heat to the lamination areas for laminating the electrode assembly 200 in the lamination areas. For this, the lamination roller assembly may for example be configured to press the electrode assembly between the one or more lamination rollers 102A and a suitable counterpart 104 (e.g., by pressing the one or more lamination rollers 102A against the counterpart 104 and/or vice-versa). The counterpart 104 may for example be a stationary surface or another lamination roller.

FIG. 2a and 2b show schematic illustrations of an electrode assembly 200 according to an example in side view (e.g., along the lamination direction/x-direction) and top view (e.g., along the normal direction/z-direction), respectively. The electrode assembly 200 comprises a first electrode sheet 202A and a first separator sheet 204A arranged on the first electrode sheet 202A. Optionally, the electrode assembly 200 may comprise a second electrode sheet 202B and a second separator 204B arranged on the first separator sheet 204A as illustrated in Fig. 2a, i.e., such that electrode and separator sheets are stacked alternatingly along the z-direction. The electrode sheets 202A/B and separator sheets 204A/B may form a monocell 704, wherein a plurality of such monocells may for example be stacked as described below with reference to Fig. 7A and 7B to form a battery cell. The electrode sheets 202A/B and separator sheets 204A/B may be provided as continuous sheets from which the electrodes and separators, respectively, of the final battery are to be formed later on (e.g., after lamination, for example by cutting) or may be provided as preformed sheets that are already in the shape of the electrodes and separators, respectively, as used in the final battery. The electrode sheets 202A/B and separator sheets 204A/B may be provided to the apparatus 100 as an unlaminated stack (as illustrated in Fig. 2a but without the lamination areas 206) or may be provided as individual sheets (e.g., on corresponding supply rolls) and may be arranged or stacked on top of each other by the apparatus 100.

The lamination roller assembly 102 of the apparatus 100 is configured to laminate the sheets of the electrode assembly 200 together in a plurality of spatially separated lamination areas 206, which are separated from each other by an intermediate area in which the sheets of the electrode assembly 200 are not laminated to each other. The lamination areas 206 are arranged in a two-dimensional pattern so as to be displaced and spaced apart with respect to each other both along the lamination direction (x) and the lateral direction (y), i.e., such that the non-laminated intermediate area separates the lamination areas 206 both along the lamination direction and the lateral direction. The intermediate area may extend across the entire width of the electrode assembly 200 (in the lateral direction) and the entire length of the electrode assembly 200 (in the lamination direction) as illustrated in Fig. 2b. After lamination, the electrode assembly 200 may be an example of a battery part according to the present invention.

In the example of Fig. 2a and 2b, there are four lamination areas 206, one in each corner of the electrode assembly 200 (corner lamination areas), which in this example has a rectangular shape (as viewed along the z-direction). This may allow for secure attachment of the separator and electrode sheets 202A/B, 204A/B while only laminating a small portion of the electrode assembly 200 so as to provide a maximum amount of intermediate area for an electrolyte to enter the electrode assembly 200 and impregnate the separator sheets 204A/B.

The number, size, shape and arrangement of the separation areas 206 in the electrode assembly is not particularly limited and may differ from the example shown in Fig. 2b. Schematic illustrations of other examples are shown in Figs. 3a to 3c.

In the example of Fig. 3a, there are six lamination areas 206, namely a first set/pair of lamination areas in the two left corners of the electrode assembly 200, a second set/pair of lamination areas in the two right corners of the electrode assembly 200 and a third set/pair of lamination areas in the center (along the lateral direction) of the electrode assembly 200. Furthermore, whereas the lamination areas 206 have a circular shape in the example of Fig. 2b (as seen along the normal direction), the lamination areas 206 in Fig. 3a form rounded squares or rectangles (i.e., squares/rectangles with rounded corners).

In the example of Fig. 3b, a larger number of lamination areas 206 is distributed across the electrode assembly 200. Similar to the examples of Fig. 2b and 3a, the lamination areas 206 are arranged in a regular two-dimensional array, wherein the axes of the array coincide with the lamination and lateral directions such that the columns and rows of the array extend along the lamination and lateral direction, respectively (i.e., the lamination areas 206 comprise a plurality of sets of lamination areas that are displaced with respect to each other along the lateral direction and each comprise a plurality of lamination areas that are aligned along the lateral direction but displaced with respect to each other along the lamination direction).

The example of Fig. 3c is similar to the example of Fig. 3b except that the lamination areas 206 in the center row are displaced along the lateral direction with respect to the lamination areas 206 in the bottom and top row. The lamination areas 206 may for example be arranged in an array with rows that are parallel to the lateral direction and columns that are tilted (at an angle) with respect to the lamination direction (or vice-versa). Additionally, the outermost lamination areas along the lateral direction are replaced by a pair of elongated edge lamination areas extending along the edges of the electrode assembly 200 along the lamination direction (i.e., the left and right edges as seen in Fig. 3c).

FIG. 4a and 4b show schematic illustrations of a lamination roller assembly 102 according to an example in side view and top view, respectively. In this example, the lamination roller assembly 102 comprises a single lamination roller 102A. The lamination roller 102A has a cylindrical body which extends and is rotatable about a rotation axis r. The rotation axis r may for example be parallel to the lateral direction. On the outer surface of the lamination roller 102A, a plurality of protrusions 102B is arranged. Each of the protrusions 102B may be used to form a respective lamination area 206 in the electrode assembly 200 (or a plurality of respective lamination areas 206 by multiple rotations of the lamination roller 102A). Accordingly, the number, shape, size and arrangement of the protrusions 102B may be adapted to the desired pattern of lamination areas 206.

In the example of Fig. 4a and 4b, the lamination roller 102A has three sets of protrusions 102B, which are displaced with respect to each other along the rotation axis r. A first set of protrusions 102B is arranged in a first end portion of the lamination roller 102A (along the rotation axis, e.g., the bottom end portion of the lamination roller 102A as seen in Fig. 4b). A second set of protrusions 102B is arranged in a second end portion of the lamination roller 102A opposite to the first end portion (e.g., in the top end portion as seen in Fig. 4b). A third set of protrusions 102B is arranged between the first and second sets, e.g., at the center of the lamination roller along the rotation axis r. Within each set of protrusions 102B, the protrusions of the respective set are arranged along the circumference of the lamination roller 102A, i.e., so as to be displaced with respect to each other along the circumferential/azimuthal direction φ. Each set of protrusions 102A may for example comprise a pair of protrusions as in the example of Fig. 4a and 4b, for example to form six lamination areas in a pattern similar to the one shown in Fig. 3a.

The protrusions 102B on the lamination roller 102A may have a rounded shape, for example have a rounded profile as viewed along the rotation axis r (cf. Fig. 4a) and/or a rounded cross-section as viewed perpendicular to the outer surface of the lamination roller 102A. The protrusions 102B may for example be formed as hemispheres as illustrated in Figs. 4a and 4b.

Instead of a single lamination roller as in the example of Fig. 4a/b, a plurality of lamination rollers may be used, each of which may have one or more protrusions on its outer surface so as to achieve the desired pattern of lamination areas. An example for this is schematically illustrated in FIG. 5a and 5b in side view and top view, respectively. In this example, the cylindrical lamination roller of Fig. 4a/b is replaced by three lamination rollers 102A. The lamination rollers 102A may all be rotatable about a common rotation axis r and may be displaced with respect to each other along the rotation axis r. The lamination rollers 102A may for example embodied as shorter cylinders or disks and may, e.g., be arranged on a common mechanical axis 106 extending along the rotation axis r. Each of the lamination rollers 102A may carry a set of protrusions arranged along the circumference of the respective lamination rollers, for example to implement the three sets/pairs of protrusions as described above with reference to Fig. 4a/b.

FIG. 6 shows a flow diagram of a method 600 for laminating an electrode assembly according to an example. The method 600 may in particular be used for laminating an electrode assembly for use in a battery. The method 600 may for example be used for laminating the electrode assembly of a battery part according to the invention such as the electrode assembly 200 of Figs. 2a/b and/or may be executed using an apparatus according to the invention such as the apparatus 100 of Fig. 1. The apparatus 100 of Fig. 1 and the electrode assembly 200 of Fig. 2a/b are therefore used as non-limiting examples for illustration purposes in the following. The method 600 is not limited to the order of execution implied by the flow chart in Fig. 6. As far as technically feasible, the steps of method 600 may be executed in an arbitrary order and may also be executed simultaneously at least in part (e.g., steps 604 and 606).

In step 602, an electrode assembly comprising a separator sheet and an electrode sheet arranged on the separator sheet is provided, for example by providing the electrode assembly 200 with the first electrode sheet 202A, the first separator sheet 204A on the first electrode sheet 202A, the second electrode sheet 202B on the first separator sheet 204A and the second separator sheet 204B on the second electrode sheet 202B. The electrode assembly 200 may, e.g., be provided in stacked (but yet unlaminated) form as illustrated in Fig. 2a or the sheets/layers thereof may be provided separately and arranged on (e.g., stacked on top of each other) as part of the method 600.

In step 604, the separator sheet(s) 204A/B and the electrode sheet(s) 202A/B are laminated to each other in a plurality of spatially separated lamination areas by local application of pressure and/or heat to the spatially separated lamination areas. For this, the lamination roller 102A (which may, e.g., be embodied as in Fig. 4a and 4b) may be rolled across the electrode assembly 200, e.g., by advancing the electrode assembly 200 in the lamination direction between the lamination roller 102A and the counterpart 104 and rotating the lamination roller 102A as illustrated in Fig. 1. The spatially separated lamination areas are arranged spaced apart from each other along a first direction (e.g., the lamination direction/x-direction) and a second direction different from the first direction (e.g., the lateral direction/y-direction). The spatially separated lamination areas may for example be arranged as in one of the examples in Fig. 2a/b and 3a-c.

In an optional step 606, a plurality of monocells 704 (each formed by pairs of alternatingly stacked electrode and separator sheets as illustrated in Fig. 2a) may be stacked on top of each other and attached to each other (e.g., using an adhesive tape and/or by lamination) to form a stack of monocells (e.g., as illustrated in Fig. 7b described below). The sheets/layers within each of the monocells 704 may be laminated prior to stacking the monocells (e.g., by executing step 604 before step 606). The (laminated) monocells may then for example be attached to each other by arranging an adhesive tape on (e.g., wrapping around) one or more side faces of the stack of monocells and/or performing a second lamination step in step 606, e.g., to uniformly laminate the monocells to each other. Alternatively, the stack of monocells and the sheets/layers within each of the monocells may be laminated simultaneously, e.g., by first forming a stack of a plurality of (unlaminated) electrode sheets and a plurality of (unlaminated) separator sheets arranged in an alternating order and laminating all sheets together at the same time (i.e., the sheets within each monocell to each other as well as the monocells to each other), e.g., in a plurality of spatially separated lamination areas (for example by performing step 604 as part of the formation of the stack of monocells in step 606).

In an optional step 608, the electrode assembly 200 (e.g., the stack of monocells 704) may be packaged in a housing, e.g., as in the example of Fig. 7a and 7b described below. This may for example comprise arranging the electrode assembly 200 in the housing and sealing the housing. Step 608 may further comprise injecting an electrolyte into the housing. The lamination areas 206 may for example be arranged in a two-dimensional area as shown in Figs. 2a/b and 3a-c and the electrolyte may be injected into the housing in a direction corresponding to one of the axes of the array (e.g., along the columns or rows of the array). This may make it easier for the electrolyte to enter the electrode assembly 200 in the non-laminated intermediate areas between the lamination areas. The electrolyte may for example be injected along a direction corresponding to the lamination direction (as illustrated in Figs. 7a and 7b by the arrowlabelled "injection direction") or the lateral direction. In some examples, step 608 may comprise performing a further lamination process after injection of the electrolyte, for example to also laminate the electrode assembly 200 and/or the monocell stack in the previously non-laminated intermediate areas.

FIG. 7a and 7b show schematic illustrations of a battery part 700 according to an example in top view and side view, respectively. The battery part 700 comprises a housing 702 in which a stack of a plurality of monocells 704 is arranged. Each of the monocells 704 may be or comprise a laminated electrode assembly such as the electrode assembly 200 of Fig. 2a and 2b. The electrode and separator sheets within each monocell 704 may be laminated together in a plurality of lamination areas 206 that are distributed across the respective monocell 704 in a two-dimensional pattern, e.g., as described above with reference to Figs. 2a/b and 3a-c. The monocells 704 in the stack may be secured using an adhesive tape, which may for example be arranged on (e.g., wrapped around) one or more side faces of the monocell stack. Additionally or alternatively, the monocells 704 in the stack may also be laminated to each other, either uniformly or also in the spatially separated lamination areas 206. The stack of monocells 704 may also constitute an example of an electrode assembly and/or a battery part as referred to herein. The battery part 700 may further comprise a pair of contacts or electrode leads 706, which may for example be connected to the first electrode sheets and the second electrode sheets, respectively, of each of the monocells 706.

The battery part 700 may be a secondary battery cell, for example a pouch-type secondary battery cell as illustrated in Fig. 7a and 7b. The housing 702 of the pouch-type battery cell may comprise two matching halves (e.g., a bottom half and an upper half as seen in Fig. 7b) between which the stack of monocells 704 is arranged (e.g., accommodate in a recess in one or both of the halves. The housing 702 (e.g., the two halves) may for example be made of a flexible material such as a thin sheet or foil. To seal the housing 702, the two halves may be attached (e.g., glued and/or welded) to each other along a circumference of the housing 702 surrounding the stack of monocells 704. The electrolyte may be injected between the two halves, e.g., in the direction of the arrow labelled "injection direction" in Figs. 7a and 7b, for example on a side of the housing 702 opposite to the contacts 706 and/or on the side of the housing on which the contacts 706 are arranged.

The examples of the present invention disclosed herein only constitute specific examples for illustration purposes. The present invention can be implemented in various ways and with many modifications without altering the underlying basic properties. Therefore, the claimed invention is only defined by the claims as stated below.

## Claims

1. An apparatus (100) for laminating an electrode assembly (200), wherein:
the apparatus (100) is configured to receive an electrode assembly (200) comprising a separator sheet (204A, 204B) and an electrode sheet (202A, 202B);
and
the apparatus (100) comprises a lamination roller assembly (102) with one or more rotatable lamination rollers (102A) for laminating the electrode sheet (202A, 202B) and the separator sheet (204A, 204B) to each other by application of pressure and/or heat, wherein the apparatus (100) is configured to roll the one or more lamination rollers (102A) across the electrode assembly (200) along a lamination direction (x) by moving one or both of the electrode assembly (200) and the one or more lamination rollers (102A), and wherein the lamination roller assembly (102) is configured to laminate the electrode sheet (202A, 202B) and the separator sheet (204A, 204B) to each other in a plurality of spatially separated lamination areas (206) that are displaced with respect to each other along the lamination direction (x) and a lateral direction (y) perpendicular to the lamination direction (x).

2. The apparatus (100) of claim 1, wherein the one or more lamination rollers (102A) comprise a lamination roller (102A) having a plurality of protrusions (102B) projecting from an outer surface thereof that faces the electrode assembly (200) when said lamination roller (102A) is rolled across the electrode assembly (200), each of said protrusions (102B) being configured to laminate the electrode sheet (202A, 202B) and the separator sheet (204A, 204B) to each other in a respective one of said plurality of spatially separated lamination areas (206).

3. The apparatus (100) of claim 2, wherein the protrusions (102B) are displaced with respect to each other along one or both of a rotation axis (r) of said lamination roller (102A) and a circumferential direction (φ) of said lamination roller (102A), the circumferential direction (φ) extending azimuthally around the rotation axis (r) of the lamination roller (102A).

4. The apparatus (100) of claim 3, wherein the protrusions (102B) comprise a first set of protrusions and a second set of protrusions, wherein the first set of protrusions is displaced with respect to the second set of protrusions along the rotation axis (r) of said lamination roller (102A) and wherein, within each of the first and second sets of protrusions, the protrusions (102B) of the respective set are displaced with respect to each other along the circumferential direction (φ) of said lamination roller (102A).

5. The apparatus (100) of any one of claims 2 to 4, wherein each of the protrusions (102B) has a rounded shape.

6. The apparatus (100) of any one of the preceding claims, wherein the one or more lamination rollers (102A) comprise a plurality of lamination rollers (102A) that are displaced with respect to each other at least in said lateral direction (y), each of said displaced lamination rollers (102A) being configured to laminate the electrode sheet (202A, 202B) and the separator sheet (204A, 204B) to each other in a respective subset of said plurality of spatially separated lamination areas (206).

7. The apparatus (100) of claim 6, wherein each of said plurality of lamination rollers (102A) has a plurality of protrusions (102B) projecting from an outer surface thereof that faces the electrode assembly (200) when said lamination roller (102A) is rolled across the electrode assembly (200), the protrusions (102B) being displaced with respect to each other along a circumferential direction (φ) of the respective lamination roller (102A).

8. A method (600) for laminating an electrode assembly (200), the method (600) comprising:
providing an electrode assembly (200) comprising a separator sheet (204A, 204B) and an electrode sheet (202A, 202B) arranged on the separator sheet (204A, 204B); and
laminating the electrode sheet (202A, 202B) and the separator sheet (204A, 204B) to each other in a plurality of spatially separated lamination areas (206) by local application of pressure and/or heat to the spatially separated lamination areas (206) using one or more rotating lamination rollers (102A), wherein the spatially separated lamination areas (206) are arranged spaced apart from each other along a first direction and a second direction different from the first direction.

9. The method (600) of claim 8, further comprising packaging the electrode assembly (200) in a housing (702) and injecting an electrolyte into the housing (702).

10. The method (600) of claim 8 or 9, wherein the electrode assembly (200) comprises a monocell (704) comprising said electrode sheet as a first electrode sheet (202A), a second electrode sheet (202B) and the separator sheet (204A) arranged between the first and second electrode sheets (202A, 202B), wherein the first electrode sheet (202A), the separator sheet (204A) and the second electrode sheet (202B) are laminated to each other in said plurality of lamination areas (206).

11. A battery part (200, 700, 704) comprising an electrode assembly (200) with an electrode sheet (202A, 202B) and a separator sheet (204A, 204B), wherein the electrode sheet (202A, 202B) and the separator sheet (204A, 204B) are laminated to each other in a plurality of lamination areas (206) that are distributed across the electrode assembly (200) in a two-dimensional pattern.

12. The battery part (200, 700, 704) of claim 11, wherein the plurality of lamination areas (206) comprise one or more corner lamination areas that are arranged in a respective corner of an overlap area in which the electrode sheet (202A, 202B) and the separator sheet (204A, 204B) overlap.

13. The battery part (200, 700, 704) of claim 11 or 12, wherein the lamination areas (206) together cover less than 50%, optionally less than 30%, further optionally less than 20% of the overlap area in which the electrode sheet (202A, 202B) and the separator sheet (204A, 204B) overlap.

14. The battery part (200, 700, 704) of any one of claims 11 to 13, wherein the lamination areas (206) are separated from each other by one or more intermediate areas, in which the electrode sheet (202A, 202B) and the separator sheet (204A, 204B) are not laminated to each other or are laminated to each other to a lesser degree than in the lamination areas (206).

15. The battery part (200, 700, 704) of any one of claims 11 to 14, wherein the electrode assembly (200) is or comprises a monocell (704) comprising said electrode sheet as a first electrode sheet (202A), a second electrode sheet (202B) and the separator sheet (204A) arranged between the first and second electrode sheets (202A, 202B), the first electrode sheet (202A), the separator sheet (204A) and the second electrode sheet (202B) being laminated to each other in said plurality of lamination areas (206), wherein optionally the electrode assembly (200) is, comprises or is comprised in a stack of a plurality of such monocells (704).

## Amended claims

### Amended claims in accordance with Rule 137(2) EPC.

1. An apparatus (100) for laminating an electrode assembly (200), wherein:
the apparatus (100) is configured to receive an electrode assembly (200) comprising a separator sheet (204A, 204B) and an electrode sheet (202A, 202B); and
the apparatus (100) comprises a lamination roller assembly (102) with one or more rotatable lamination rollers (102A) for laminating the electrode sheet (202A, 202B) and the separator sheet (204A, 204B) to each other by application of pressure and/or heat, wherein the apparatus (100) is configured to roll the one or more lamination rollers (102A) across the electrode assembly (200) along a lamination direction (x) by moving one or both of the electrode assembly (200) and the one or more lamination rollers (102A), and wherein the lamination roller assembly (102) is configured to laminate the electrode sheet (202A, 202B) and the separator sheet (204A, 204B) to each other in a plurality of spatially separated lamination areas (206) that are displaced with respect to each other along the lamination direction (x) and a lateral direction (y) perpendicular to the lamination direction (x), wherein the plurality of spatially separated lamination areas (206) comprise one or more corner lamination areas that are arranged in a respective corner of an overlap area in which the electrode sheet (202A, 202B) and the separator sheet (204A, 204B) overlap and/or one or more edge lamination areas extending parallel and adjacent to a respective edge of the overlap area.

2. The apparatus (100) of claim 1, wherein the one or more lamination rollers (102A) comprise a lamination roller (102A) having a plurality of protrusions (102B) projecting from an outer surface thereof that faces the electrode assembly (200) when said lamination roller (102A) is rolled across the electrode assembly (200), each of said protrusions (102B) being configured to laminate the electrode sheet (202A, 202B) and the separator sheet (204A, 204B) to each other in a respective one of said plurality of spatially separated lamination areas (206).

3. The apparatus (100) of claim 2, wherein the protrusions (102B) are displaced with respect to each other along one or both of a rotation axis (r) of said lamination roller (102A) and a circumferential direction (φ) of said lamination roller (102A), the circumferential direction (φ) extending azimuthally around the rotation axis (r) of the lamination roller (102A).

4. The apparatus (100) of claim 3, wherein the protrusions (102B) comprise a first set of protrusions and a second set of protrusions, wherein the first set of protrusions is displaced with respect to the second set of protrusions along the rotation axis (r) of said lamination roller (102A) and wherein, within each of the first and second sets of protrusions, the protrusions (102B) of the respective set are displaced with respect to each other along the circumferential direction (φ) of said lamination roller (102A).

5. The apparatus (100) of any one of claims 2 to 4, wherein each of the protrusions (102B) has a rounded shape.

6. The apparatus (100) of any one of the preceding claims, wherein the one or more lamination rollers (102A) comprise a plurality of lamination rollers (102A) that are displaced with respect to each other at least in said lateral direction (y), each of said displaced lamination rollers (102A) being configured to laminate the electrode sheet (202A, 202B) and the separator sheet (204A, 204B) to each other in a respective subset of said plurality of spatially separated lamination areas (206).

7. The apparatus (100) of claim 6, wherein each of said plurality of lamination rollers (102A) has a plurality of protrusions (102B) projecting from an outer surface thereof that faces the electrode assembly (200) when said lamination roller (102A) is rolled across the electrode assembly (200), the protrusions (102B) being displaced with respect to each other along a circumferential direction (φ) of the respective lamination roller (102A).

8. A method (600) for laminating an electrode assembly (200), the method (600) comprising:
providing an electrode assembly (200) comprising a separator sheet (204A, 204B) and an electrode sheet (202A, 202B) arranged on the separator sheet (204A, 204B); and
laminating the electrode sheet (202A, 202B) and the separator sheet (204A, 204B) to each other in a plurality of spatially separated lamination areas (206) by local application of pressure and/or heat to the spatially separated lamination areas (206) using one or more rotating lamination rollers (102A), wherein the spatially separated lamination areas (206) are arranged spaced apart from each other along a first direction and a second direction different from the first direction, wherein the plurality of spatially separated lamination areas (206) comprise one or more corner lamination areas that are arranged in a respective corner of an overlap area in which the electrode sheet (202A, 202B) and the separator sheet (204A, 204B) overlap and/or one or more edge lamination areas extending parallel and adjacent to a respective edge of the overlap area.

9. The method (600) of claim 8, further comprising packaging the electrode assembly (200) in a housing (702) and injecting an electrolyte into the housing (702).

10. The method (600) of claim 8 or 9, wherein the electrode assembly (200) comprises a monocell (704) comprising said electrode sheet as a first electrode sheet (202A), a second electrode sheet (202B) and the separator sheet (204A) arranged between the first and second electrode sheets (202A, 202B), wherein the first electrode sheet (202A), the separator sheet (204A) and the second electrode sheet (202B) are laminated to each other in said plurality of lamination areas (206).

11. A battery part (200, 700, 704) comprising an electrode assembly (200) with an electrode sheet (202A, 202B) and a separator sheet (204A, 204B), wherein the electrode sheet (202A, 202B) and the separator sheet (204A, 204B) are laminated to each other in a plurality of lamination areas (206) that are distributed across the electrode assembly (200) in a two-dimensional pattern, wherein the plurality of lamination areas (206) comprise one or more corner lamination areas that are arranged in a respective corner of an overlap area in which the electrode sheet (202A, 202B) and the separator sheet (204A, 204B) overlap and/or one or more edge lamination areas extending parallel and adjacent to a respective edge of the overlap area.

12. The battery part (200, 700, 704) of claim 11, wherein the lamination areas (206) together cover less than 50%, optionally less than 30%, further optionally less than 20% of the overlap area in which the electrode sheet (202A, 202B) and the separator sheet (204A, 204B) overlap.

13. The battery part (200, 700, 704) of claim 11 or 12, wherein the lamination areas (206) are separated from each other by one or more intermediate areas, in which the electrode sheet (202A, 202B) and the separator sheet (204A, 204B) are not laminated to each other or are laminated to each other to a lesser degree than in the lamination areas (206).

14. The battery part (200, 700, 704) of any one of claims 11 to 13, wherein the electrode assembly (200) is or comprises a monocell (704) comprising said electrode sheet as a first electrode sheet (202A), a second electrode sheet (202B) and the separator sheet (204A) arranged between the first and second electrode sheets (202A, 202B), the first electrode sheet (202A), the separator sheet (204A) and the second electrode sheet (202B) being laminated to each other in said plurality of lamination areas (206), wherein optionally the electrode assembly (200) is, comprises or is comprised in a stack of a plurality of such monocells (704).
